# EUROPEAN PATENT APPLICATION

(11) **EP 0 676 885 A1**
(43) Date of publication of application: **11.10.1995**
(21) Application number: 95200767.2
(22) Date of filing: 27.03.1995
(51) Int. Cl.: H04M 11/06, H04L 25/03

(54) **Echocanceller for modem with scrambler**

(30) Priority: 07.04.1994 NL 9400549
(71) Applicant: Koninklijke PTT Nederland N.V., NL-2509 CH The Hague (NL)
(72) Inventor: Amting, Hendrikus Theodorus Maria, NL-3862 TH Nijkerk (NL); Klarenbeek, Johannes Willem Maria, NL-1211 AA Hilversum (NL); Jekel, Marinus Gerardus, NL-3823 AT Amersfoort (NL); Mallee, Rudolf Wilhelmus Gerard, NL-3833 VE Leusden (NL); Roovers, Willem Antonius Hendrikus, NL-4813 AC Breda (NL); Schuring, Marcel Eduard Frederik, NL-3811 HK Amersfoort (NL)

(57) **Abstract**

If within a coupling device such as, for example, a baseband modem, the scrambler and descrambler present are based on the same polynomial, a process running in a processor device will at a certain time be terminated erroneously, as a result of the echo canceller present in the coupling device being fed two identical signals, a signal entering the coupling device being interpreted as an echo signal and consequently being entirely compensated for. Providing the coupling device with adjustment means such as, for example, delay means for delaying an edge in a status signal intended for the processor device ensures, in a very inexpensive and simple manner, that the status signal is temporarily adjusted, so that the running process is not terminated.

## Description

### A Background of the invention

The invention relates to a coupling device for coupling a processor device to a communication link, comprising
- a coupling plane for coupling to the processor device,
- scrambler means, coupled to the coupling plane, for receiving, via the coupling plane, data coming from the processor device,
- descrambler means coupled to the coupling plane, for transmitting, via the coupling plane, data intended for the processor device and for transmitting, via the coupling plane, at least one status signal intended for the processor device,
- an echo cancelling device coupled to the scrambler means and to the descrambler means,
- a hybrid device coupled to the scrambler means and to the echo cancelling device, for transmitting and receiving data via the communication link.

Such a coupling device is generally known and, in popular parlance, is better known as a modem or modulator-demodulator. This popular name does not, however, always represent the coupling device entirely correctly, for example in the case of a baseband modem which is sometimes equipped neither with modulation options nor with demodulation options. The coupling device is equipped with scrambler means for scrambling and, for example, for coding data coming from the processor device, said data then being fed, for example via a low-pass filter and via a hybrid device, to a communication link. Data coming from the communication link is fed, via the hybrid device and, for example, via a low-pass filter, to descrambler means for descrambling and, for example, for decoding and smoothing said data. As it is possible for undesirable echoes to be supplied, via the (overflow attenuation of the) hybrid device, to the descrambler means, the coupling device should be provided with an echo cancelling device. The echo cancelling device is coupled to the scrambler means and is further situated between the hybrid device and, for example, the low-pass filter on the one hand and the descrambler means on the other hand, and compensates for said undesirable echoes.

This known coupling device has, inter alia, the drawback that, particularly if scrambler means in a coupling device on one side of the communication link (or descrambler means in a coupling device on another side of the communication link) and scrambler means in a coupling device on another side of the communication link (or descrambler means in a coupling device on one side of the communication link) are based on the same polynomial, the scrambler means and the descrambler means in each coupling device may, at a certain time, start to run in phase for some time, and that the possibility then sometimes arises of undesired termination of a process running in the processor device.

### B Summary of the invention

It is an object of the invention, inter alia, to provide a coupling device of the type mentioned in the preamble, by means of which erroneous termination, by a processor device, of a process running in the processor device is prevented.

To this end, the coupling device according to the invention is characterized in that the coupling device is provided with adjustment means, which are situated between the coupling plane and the descrambler means, for adjusting a status signal.

If, for example, for a certain time signals having a repetitive character are sent back and forth, such as flags having a unique bit combination which are transmitted as long as no information transfer takes place, the same signal is twice fed to an echo cancelling device, particularly while the scrambler means and the descrambler means are running in phase, as a result of which the signal arriving via the communication link and the hybrid device is interpreted by the echo cancelling device as an undesirable echo. As a result, the echo cancelling device compensates as completely as possible for said arriving signal, which leads to a signal being fed to the descrambler means, which is virtually equal to zero. In response to this signal, the descrambler means generate a particular status signal (Data Carrier Detect) which makes the processor device decide to terminate a running process completely. This particular status signal comprises, for example, a pulse having the value logical zero, which interrupts the normal status signal having the value logical one. Adjusting this particular status signal via adjustment means ensures that a process running in the processor device is not terminated erroneously.

Since the processor device, after, not having received any data for 100 msec., for example, generates a "retry" command in order to repeat a data transfer (it being assumed that the process running in the processor device has not already terminated), such a pulse in that case will have a duration of a good 100 msec., since after the "retry" command the back-and-forth transmission of signals having a repetitive character is now ruled out. The adjustment should then take place for, for example, 200 msec. and can be implemented, for example, by delaying the entire status signal by 200 msec., by testing this status signal for the presence of the said pulse, and by "bridging" this pulse if it is present. The status signal must not simply be coupled continuously to a fixed value, such as, for example, logical one, since if the communication link is broken, this should be reported to the processor device via a transistion in the status signal. It should also be noted in this context that feeding a signal to the descrambler means, which is virtually equal to zero, will lead, after a certain time, to the scrambler means and the descrambler means no longer running in phase.

The invention is based, inter alia, on the insight that most processes running in processor devices, for the purpose of communication with another processor device, are equipped with a "retry" command for repeating a data transfer, which "retry" command is generated after no data has been received during a process time interval. This "retry" command results in different signals to be fed to the echo cancelling device, so that the status signal need be adjusted only from the instant of data no longer being received by the processor device until the instant of the "retry" command being generated, and erroneous process termination will then no longer take place.

In general it could therefore be assumed that the adjustment means reduce an (effect of a) signal shape present in the status signal, the signal shape having a duration which is smaller than or equal to a predetermined time interval. Such adjustment means may obviously be implemented either completely by means of hardware or completely by means of software or in part by means of hadrware [sic] and in part by means of software.

A different solution of the problem is obtained by, if in a coupling device the scrambler means and descrambler means are based on the same polynomial, the act of replacing, in a coupling device on one side of the communication link, for example, the scrambler means by scrambler means based on a different polynomial and of then replacing, in a coupling device on another side of the communication link, the descrambler means by descrambler means based on the different polynomial, which solution in practical terms is hardly practical and is expensive, or by, if in a coupling device the scrambler means and descrambler means are based on the same polynomial, the act of supplementing, in a coupling device on one side of the communication link, for example, the scrambler means with scrambler means based on a different polynomial and of then supplementing, in a coupling device on another side of the communication link, the descrambler means, with descrambler means based on the different polynomial, which solution in practical terms is very expensive. The two solutions moreover lead to two different types of coupling devices which are consequently less readily applicable in multipoint links.

A first embodiment of the coupling device according to the invention is characterized in that the adjustment means comprise delay means for delaying an edge present in the status signal.

As a result of, for example, the first edge of the pulse having the value logical zero of the status signal which, under normal conditions, has the value logical one, which first edge thus relates to a 1 → 0 transition, being delayed for at least the duration of the process time interval, said first edge will pass the second edge of the pulse in time, which second edge relates to a 0 → 1 transition. As a result, the status signal will continuously have the value logical one, and a process running in the processor device will not be terminated erroneously. If, on the other hand, the communication link is broken, only the first edge will appear in the status signal (thus without the second edge following it), which edge in turn is delayed for at least the duration of the process time interval, whereafter the process is still terminated. In this case, the process is therefore terminated somewhat later than would have been the case without the presence of the delay means, but this drawback is of very minor significance compared with the abovementioned advantages.

A second embodiment of the coupling device according to the Invention is characterized in that the coupling device is provided with further adjustment means, which are situated between the coupling plane and the descrambler means, for adjusting a further status signal.

Some processor devices are driven both via the status signal (Data Carrier Detect) and via a further status signal (Data Set Ready). Adjusting this further status signal via further adjustment means ensures that a process running in the processor device is still not terminated erroneously.

A third embodiment of the coupling device according to the invention is characterized in that the further adjustment means comprise further delay means for delaying an edge present in the further status signal.

As a result of, for example, the first edge of a further pulse having the value logical one of the further status signal which, under normal conditions, has the value logical zero, which first edge thus relates to a 0 → 1 transition, being delayed for at least the duration of the further pulse, said first edge will pass the second edge of the further pulse in time, which second edge relates to a 1 → 0 transition. As a result, the further status signal will continuously have the value logical zero, and a process running in the processor device will still not be terminated erroneously.

A fourth embodiment of the coupling device according to the invention is characterized in that the delay means and the further delay means are each provided with a chargeable and dischargeable capacitor and with a threshold-dependent device coupled to the capacitor.

As a result of a capacitor being charged and discharged and a voltage present across the capacitor being compared via a threshold-dependent device such as, for example, a voltage-dependent device, (further) delay means are obtained which are able both to delay a transition from a bit having a value logical one to a bit having a value logical zero and to delay a transition from a bit having a value logical zero to a bit having a value logical one.

A fifth embodiment of the coupling device according to the invention is characterized in that the threshold-dependent device is a transistor, of which a gate electrode is coupled to the capacitor.

By means of such (further) delay means, a coupling device is obtained which solves the problem and is scarcely more expensive than the original version.

A sixth embodiment of the coupling device according to the invention is characterized in that the capacitor is coupled, via a resistor and a diode, to an input of the delay means.

As a result of using the resistor, the delay time can be defined precisely, while use of the diode ensures that a charging time and a discharging time can differ from one another, by means of which it is thus possible for different edges to be delayed for different times, and/or use of the diode ensures that charging or discharging just does or just does not take place via the descrambler means.

A seventh embodiment of the coupling device according to the invention is characterized in that a main electrode of the transistor is coupled to a gate electrode of a further transistor, of which a main electrode is coupled to an output of the delay means.

This coupling device is equipped with two-stage transistor delay means which, compared with single-stage delay means, generate better-defined output signals.

The invention further relates to a system comprising a processor device and a coupling device (or possibly a specific embodiment thereof) according to the invention.

The invention yet further relates to a processor device comprising a processor coupling plane for coupling the processor device via a coupling device to a communication link, which processor device is designed for
- transmitting data intended for the coupling device,
- receiving data coming from the coupling device, and
- receiving at least one status signal coming from the coupling device.

The processor device according to the invention is characterized in that the processor device is designed for adjusting a status signal by reducing a signal shape which occurs in the status signal and has a duration which is smaller than or equal to a predetermined time interval.

Thus a processor device is obtained which can be coupled to a known coupling device and which is able, entirely by means of software, to solve the problem described earlier of the known coupling device.

A first embodiment of the processor device according to the invention is characterized in that the processor device is designed for adjusting a further status signal by reducing a further signal shape which occurs in the further status signal and has a further duration which is smaller than or equal to a predetermined further time interval.

### C References

### ■ Dutch patent application 9400549 (priority document)

This reference is considered to be incorporated in this European patent application.

### D Specific embodiment

The invention will be explained in more detail with reference to a specific embodiment depicted in the figures, in which:
Figure 1 shows a coupling device according to the invention,
Figure 2 shows adjustment means constructed as delay means for use in the coupling device according to the invention, and
Figure 3 shows further adjustment means constructed as further delay means for use in the coupling device according to the invention.

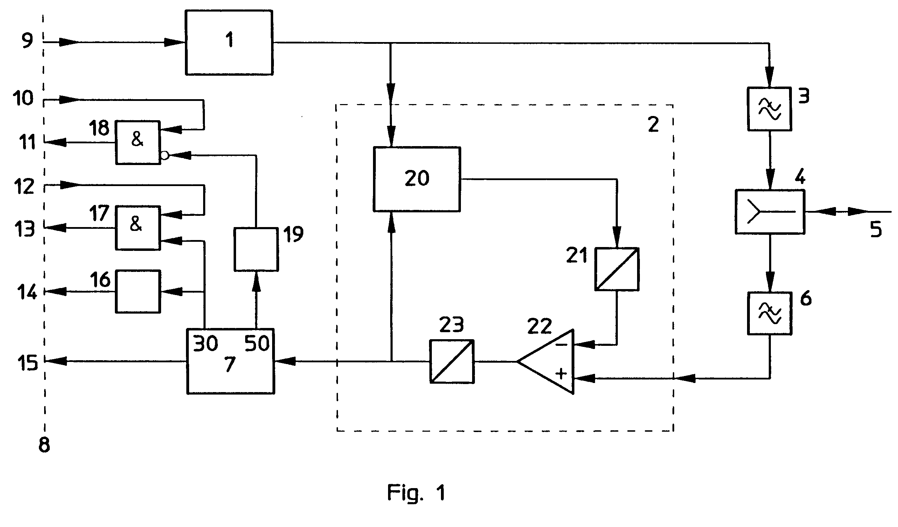

The coupling device depicted in Figure 1 comprises scrambler means 1 of which an input is coupled to a pin 9 of a coupling plane 8 for receiving data coming from a processor device not shown in Figure 1, and of which an output is coupled to a first input of an echo cancelling device 2 and, via a low-pass filter 3, to an input of a hybrid device 4. An output of hybrid device 4 which is further coupled to a communication link 5 such as, for example, a telephone link, is coupled via a low-pass filter 6 to a second input of an echo cancelling device 2. An output of echo cancelling device 2 is coupled to an input of descrambler means 7, of which an output is coupled to a pin 15 of coupling plane 8 for transmitting data intended for the processor device not depicted in Figure 1. A level output 30 of descrambler means 7 is coupled to an input of adjustment means 16 and to a first input of (a symbolic) AND gate 17. An output of adjustment means 16 is coupled to a pin 14 (DCD or Data Carrier Detect) of coupling plane 8, and an output of AND gate 17 is coupled to a pin 13 (CTS or Clear To Send) of coupling plane 8. A pin 12 (RTS or Request to Send) of coupling plane 8 is coupled to a second input of AND gate 17. A violation output 50 of descrambler means 7 is coupled to an input of further adjustment means 19, of which an output is coupled to a first (inverting) input of (a symbolic) AND gate 18. An output of AND gate 18 is coupled to a pin 11 (DSR or Data Set Ready) of coupling plane 8, and a pin 10, (DTR or Data Terminal Ready) of coupling plane 8 is coupled to a second input of AND gate 18. Echo cancelling device 2 comprises an echo canceller 20, of which a first input is coupled to the first input of echo cancelling device 2 and of which a second input is coupled to the output of echo cancel-ling device 2. An output of echo canceller 20 is coupled, via a D/A converter (Digital to Analog), to a first input of comparing means 22, of which a second input is coupled to the second input of echo cancelling device 2. An output of comparing means 22 is coupled, via an A/D converter (Analog to Digital), to the output of echo cancelling device 2.

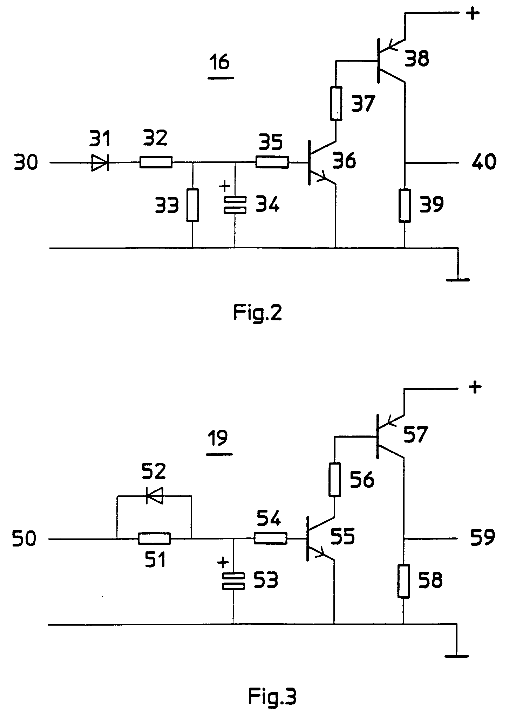

The adjustment means 16 depicted in Figure 2 are constructed as delay means and comprise a diode 31, of which an anode is coupled to level output 30 of descrambler means 7 and of which a cathode is coupled to a resistor 32 which is coupled to earth via a paralel [sic] connection of a resistor 33 and a capacitor 34. Further, resistor 32 is coupled, via a resistor 35, to a base of an n-p-n transistor 36 of which an emitter is coupled to earth and of which a collector is coupled, via a resistor 37, to a base of a p-n-p transistor 38. An emitter of transistor 38 is coupled to a positive supply voltage pin, and a collector of transistor 38 is coupled to earth via a resistor 39. This collector forms an output 40 of adjustment means 16 and is coupled to pin 14.

The further adjustment means 19 depicted in Figure 3 are constructed as further delay means and comprise a paralel [sic] connection of a resistor 51 and a diode 52, an anode of diode 52 being coupled to violation output 50 of descrambler means 7, and a cathode of diode 52 being coupled, via a resistor 54, to a base of an n-p-n transistor 55. This cathode is further coupled to earth via a capacitor 53. An emitter of transistor 55 is coupled to earth and a collector of transistor 55 is coupled, via a resistor 56, to a base of a p-n-p transistor 57. An emitter of transistor 57 is coupled to a positive supply voltage pin, and a collector of transistor 57 is coupled to earth via a resistor 58. This collector forms an output 59 of further adjustment means 19 and is coupled to the first input of AND gate 18.

The coupling device depicted in the figures operates as follows. Scrambler means 1, which for example comprise a scrambler and an AMI coder, scramble and code a first data signal received via pin 9, which scrambled and coded first data signal is subsequently, on the one hand, low-pass-filtered via low-pass-filter 3 and is fed to communication link 5 via hybrid device 4 and, on the other hand, is fed to echo canceller 20. A second data signal supplied via communication link 5 and via hybrid device 4 is low-pass-filtered via low-pass-filter 6 and is fed to comparing means 22, where any echo of the first data signal present in the second data signal is deducted. The second data signal thus compensated is then fed to descrambler means 7 which, for example, comprise an equalizer, a decoder and a descrambler. Descrambler means 7 generate the equalized, decoded and descrambled second data signal to pen 15 and generate, via level output 30, the first data signal (which generally has, for example, the value logical one) and via violation output 50 generate the second status signal (which generally has, for example, the value logical zero). Inter alia via the two status signals, inter alia via the AND gates 17 and 18, and inter alia via the pins 10, 11, 12, 13 and 14 information is exchanged, between the processor device not depicted in Figure 1 and the coupling device, with respect to the mutual communication, a status signal indicating, for example, whether or not the communication link is broken. The mode of operation, as described so far, of the coupling device is generally known to those skilled in the art as is the content of scrambler means 1, echo cancelling device 2 and descrambler means 7, which together are available under the number TS7590CFND. The coupling plane is likewise generally known and in the literal sense relates to, for example, a connector, although such a coupling plane in a more figurative sense may of course be located anywhere between the scrambler means and descrambler means on the one hand and the processor of the processor device on the other hand.

If, for example, for a certain time first and second data signals having a repetitive character are transmitted back and forth between two coupling devices which are situated on both sides of communication link 5, such as flags having a unique bit combination which are transmitted as long as no information transfer takes place, the same signal is twice fed to echo cancelling device 2 what happens is, in particular while scrambler means 1 and descrambler means 7 are running in phase, which running in phase may arise, for example, if scrambler means 1 and descrambler means 7 are based on the same polynomial, that as a result of which the signal arriving via communication link 5 and hybrid device 4 is interpreted by echo cancelling device 2 as an undesirable echo. As a result, echo cancelling device 2 compensates as completely as possible for this arriving signal, which leads to a signal being fed to descrambler means 7, which is virtually equal to zero.

In response to this signal, descrambler means 7 generate, for example, a first status signal which makes the processor device decide to terminate a running process completely. This first status signal comprises, for example, a pulse having the value logical zero, which interrupts the normal status signal having the value logical one. Since the processor device, after for example, not having received any data for 100 msec., generates a "retry" command in order to repeat a data transfer (it being assumed that the process running in the processor device has not already terminated), such a pulse in that case will have a duration of a good 100 msec., since after the "retry" command the back-and-forth transmission of signals having a repetitive character is now ruled out. The adjustment should then take place for, for example, a time greater than the process time interval of, for example, 100 msec. and can be implemented, for example, by the first edge of the pulse having the value logical zero of the first status signal which, under normal conditions, has the value logical one, which first edge thus relates to a 1 → 0 transition, being delayed for at least the duration of the process time interval, as a result of which said first edge will pass the second edge of the pulse in time, which second edge relates to 0 → 1 transition. As a result, the first status signal will continuously have the value logical one, and a process running in the processor device is not terminated erroneously.

Said delaying of the first edge of the first status signal is implemented by means of the delay means depicted in Figure 2. If the resistors 33 and 35 are, for example, ten times greater than resistor 32, capacitor 34 will be able to charge rapidly via diode 31 and resistor 32, as a result of which a 0 → 1 transition will be passed on very rapidly to output 40, while capacitor 34 will discharge more slowly via the resistors 33 and 35, as a result of which the passing on of a 1 → 0 transition to output 40 will be subject to delay.

A similar reasoning is possible with respect to the second status signal and the delay means depicted in Figure 3. In all cases there is the option of drivers (not shown in the figures) being placed in the vicinity of coupling plane 8, in order to solve, for example, the problem of different supply voltages. Since coupling plane 8, in a more figurative sense, can be situated anywhere between the scrambler means and descrambler means on the one hand and the processor of the processor device on the other hand, the possibility of adjustment means 16 and further adjustment means 19 being placed in the processor device itself should not be excluded. In that case, hardware is therefore added to the processor device, which hardware could, in a simple manner, be replaced by software.

The processor device then comprises a processor coupling plane for coupling the processor device via a coupling device to a communication link, and is designed for
- transmitting data intended for the coupling device,
- receiving data coming from the coupling device,
- receiving at least one status signal coming from the coupling device, and
- adjusting a status signal by reducing a signal shape which occurs is the status signal and has a duration which is smaller than or equal to a predetermined time interval.

A greatly simplified version of a program written in a simple programming language might look as follows: 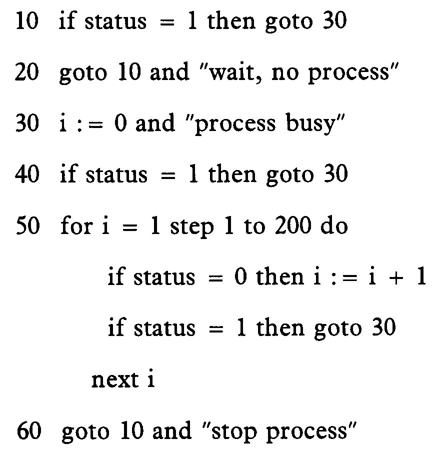
If the communication link is broken, the status signal will have the value logical zero, and the program will go from line 10 to line 20 (status = 0) and then jump back from line 20 to line 10 ("wait, no proces" [sic]). As soon as the communication link is set up, the status signal will attain the value logical one, as a result of which the program goes from line 10 to line 30 ("process busy"), which leads to an initialization of a parameter i (i: =0). Then the program goes from line 30 to line 40 and then from line 40 back to line 30, as long as the status signal retains the value logical one. If the status signal now, as described earlier, erroneously attains the value logical zero, the program jumps from line 40 to line 50, the parameter i being incremented as long as the status signal has the value logical zero. If the status signal then attains the value logical one, before the parameter i has reached the value 200, the program will go back to line 30, and as soon as the parameter i has reached the value 200, the program ends up in line 60, the process being terminated ("stop process") and the program jumping back to line 10. Here it has been assumed that the program loop present in line 50 takes approximately 1 msec. The value 200 being reached by the parameter i then corresponds to approximately 200 msec. If the status signal has the value logical zero for longer than 200 msec., this will result in the process running in the processor of device being terminated, and if the status signal within said time span again attains the value logical one, the process will not be terminated. Should the program loop in line 50 take, for example 0.1 msec. (i.e. ten times shorter), the final value to be reached by parameter i would have to become 2000 (i.e. ten times greater), etc. Thus the time interval can be adjusted in a simple manner. Obviously, many variations, to be devised by those skilled in the art, are possible on this software-type implementation. With respect to adaptation to a hardware-type coupling device, a software-type implementation has the drawback that an application needs to be adapted at the same time, which the owners of system often find tedious. If the system is already equipped with system parameters which can be adjusted, this drawback is obviously diminished.

## Claims

1. Coupling device for coupling a processor device to a communication link, comprising
- a coupling plane for coupling to the processor device,
- scrambler means, coupled to the coupling plane, for receiving, via the coupling plane, data coming from the processor device,
- descrambler means coupled to the coupling plane, for transmitting, via the coupling plane, data intended for the processor device and for transmitting, via the coupling plane, at least one status signal intended for the processor device,
- an echo cancelling device coupled to the scrambler means and to the descrambler means,
- a hybrid device coupled to the scrambler means and to the echo cancelling device, for transmitting and receiving data via the communication link,
characterized in that the coupling device is provided with adjustment means, which are situated between the coupling plane and the descrambler means, for adjusting a status signal.

2. Coupling device according to Claim 1, characterized in that the adjustment means comprise delay means for delaying an edge present in the status signal.

3. Coupling device according to Claim 2, characterized in that the coupling device is provided with further adjustment means, which are situated between the coupling plane and the descrambler means, for adjusting a further status signal.

4. Coupling device according to Claim 3, characterized in that the further adjustment means comprise further delay means for delaying an edge present in the further status signal.

5. Coupling device according to Claim 4, characterized in that the delay means and the further delay means are each provided with a chargeable and dischargeable capacitor and with a threshold-dependent device coupled to the capacitor.

6. Coupling device according to Claim 5, characterized in that the threshold-dependent device is a transistor, of which a gate electrode is coupled to the capacitor.

7. Coupling device according to Claim 6, characterized in that the capacitor is coupled, via a resistor and a diode, to an input of the delay means.

8. Coupling device according to Claim 7, characterized in that a main electrode of the transistor is coupled to a gate electrode of a further transistor, of which a main electrode is coupled to an output of the delay means.

9. System comprising a processor device and a coupling device according to any one of Claims 1 to 8 inclusive.

10. Processor device comprising a processor coupling plane for coupling the processor device via a coupling device to a communication link, which processor device is designed for
- transmitting data intended for the coupling device,
- receiving data coming from the coupling device, and
- receiving at least one status signal coming from the coupling device,
characterized in that the processor device is designed for adjusting a status signal by reducing a signal shape which occurs in the status signal and has a duration which is smaller than or equal to a predetermined time interval.

11. Processor device according to Claim 10, characterized in that the processor device is designed for adjusting a further status signal by reducing a further signal shape which occurs in the further status signal and has a further duration which is smaller than or equal to a predetermined further time interval.
